Europäisches Patentamt

**(19)** European Patent Office

Office européen des brevets

**(11)** Publication number : **0 334 450 B1**

## EUROPEAN PATENT SPECIFICATION

**(45)** Date of publication of patent specification :
20.05.92 Bulletin 92/21

**(51)** Int. Cl.$^5$ : **B62D 29/04**

**(21)** Application number : **89200706.3**

**(22)** Date of filing : **18.03.89**

**(54)** Method of manufacturing a vehicle body consisting of a synthetic resin, vehicle body manufactured with this method andvehicle provided with such a vehicle body.

**(30)** Priority : **21.03.88 NL 8800695**

**(43)** Date of publication of application :
**27.09.89 Bulletin 89/39**

**(45)** Publication of the grant of the patent :
**20.05.92 Bulletin 92/21**

**(84)** Designated Contracting States :
**AT BE CH DE ES FR GB GR IT LI LU NL SE**

**(56)** References cited :
**EP-A- 0 061 919**
**FR-A- 1 111 380**
**US-A- 4 491 362**

**(73)** Proprietor : **PLASTISOL B.V.**
**Molenveld 5**
**NL-5446 BL Wanroij (NL)**

**(72)** Inventor : **Walraven, Rob R.**
**Molenveld 5**
**NL-5446 BL Wanroy (NL)**

**(74)** Representative : **Timmermans, Anthonius**
**C.Th., Ir. et al**
**European Patent Attorneys Octrooibureau**
**Zuid P.O. Box 2287**
**NL-5600 CG Eindhoven (NL)**

## Description

The invention relates to a method for manufacturing a body of synthetic material, as well as to a body of synthetic material manufactured according to the method. and to a vehicle provided with such a synthetic body.

After a plastic carriage work has been produced, in a manner generally known, said carriage work is placed on a chassis of a vehicle. Especially terrain vehicles can be thought of thereby, but also e.g. fire engines. A carriage work to be used for such vehicles is generally mounted on the chassis of the vehicle via a structure of metal supporting members to be provided separately. Because the above vehicles are also frequently driven across uneven terrain, completely loaded, there is a very real danger that keeping the carriage work under control with every movement of the chassis will cause metal fatigue, resulting in hair cracks in the metal, with all its consequences, or in a possibly permanent deformation of the metal bearing members.

A further disadvantage of using separate metal members that may be mentioned, in particular when the vehicle is being driven on terrains which are only passable with difficulty, is the occurrence of high-loads at the spot of the supporting points of the metal members between the chassis and a carriage work provided with a load, as a result of the high degree of rigidity of the metal parts.

A method and vehicle body as mentioned above , whereby at least two longitudinal girders of synthetic material are attached to a bottom part of the body is known from EP-A-61919, wherein a fiber-reinforced structural core forming a floor has longitudinal ribs attached thereto, p.e. by separate plastic adhesives.

It is an object of the present invention to provide a method for manufacturing a synthetic body, wherein the use of separate plastic adhesives is superfluous, wherein the body is made of synthetic material as an integral, selfsupporting and flexibly deformable corrosion resistant and lightweight body and wherein the body allows a torsion between the body and the chassis to avoid high point loods at its supporting points. Thereto the method according to the invention is characterized in that the method comprises the following steps:

a: a substantially U-shaped profile of the longitudinal girder is chosen;

b: at least one extra layer of laminate material is provided on the profile;

c: at least one extra layer of laminate material is provided on the place where the longitudinal girder is to be laminated on the bottom part; and

d: the extra laminated profile is attached to the extra laminated bottom part by means of laminating, by providing the extra laminated profile, together with the extra laminated bottom part, with at least one layer of laminate material.

It is noted here, that it is known perse from FR-A-1111380 to attach longitudinal girders to a part of a body by providing the girder together with the part with a layer of laminate material.

By choosing a substantially U-shaped profile of the longitudinal girder in the method according to the invention the flexible suspension of the body is promoted, whilst by providing extra layers of laminate material on the longitudinal girder and the bottom part the mechanical sturdiness of the body according to the invention is contributed to.

A further method according to the invention is characterized in that an extra layer of laminate material is provided on at least the curved parts of the-U-shaped profile of the longitudinal girder.

Advantageous is that the mechanical sturdiness of the curved parts of the profile, which are mechanically more vulnerable in general, is increased by extra laminating.

Another method according to the invention is characterized in that at least one extra layer of laminate material is provided on a bearing surface of the longitudinal girder.

Advantageous is that a bearing surface of the longitudinal girder can be reinforced in a simple manner.

Yet another method according to the invention is characterized in that component parts of the synthetic body, which are to be attached together and to the bottom part, are provided with an extra layer of laminate material at the spot of respective contact surfaces before being laminated together into a closed structure.

Advantageous is that by laminating the structure as a closed construction it will likewise be suitable for transporting e.g. liquids or powders, as is the case with tank lorries or fire engines. The fact that the structure is closed increases the stability of the carriage work as a whole, also in the curves. Furthermore the self-supporting body and the structure together as a whole take up the mechanical forces which occur under various driving conditions in a flexible manner.

When laminating the various component parts of the synthetic body it is an additional advantage that the parts with certain nominal dimensions can be produced by means of a limited number of moulds. Larger parts can be made in a simple manner by laminating from parts having standard dimensions. Because of this the number of different kinds of moulds to be used is limited, as a result of which the method according to the invention is cost-cutting, in view of the generally high cost price of moulds.

Yet another method according to the invention is characterized in that at least one wall forming a partition is laminated in the structure.

The partition contributes towards an even further reinforcement of the structure. Not only does the partition restrict any wave motion of the liquid present in the structure, but because of it the structure is furthermore particularly suitable to serve as a stable carrier for additional component parts of the synthetic body,

Yet another simple embodiment of the method according to the invention is characterized in that additional component parts of the plastic carriage work, prior to being attached to the structure by means of laminating, are provided with an extra layer of laminating material at the spot of respective further contact surfaces.

The invention will be further explained hereinafter with reference to the drawing, in which corresponding elements will be indicated by the same reference numbers. In the drawing:

Fig 1 is partial sectional illustration of a synthetic body, made according to the method according to the invention.

Figs 2a - 2c diagrammatically illustrate the extension of longitudinal girders having supporting points, said longitudinal girders being provided on a bottom part and being manufactured according to the method according to the invention.

Fig 3 is an exploded view of a preferential embodiment of the synthetic body according to the invention, and

Fig 4 is an illustration of a preferential embodiment of the synthetic body according to the invention.

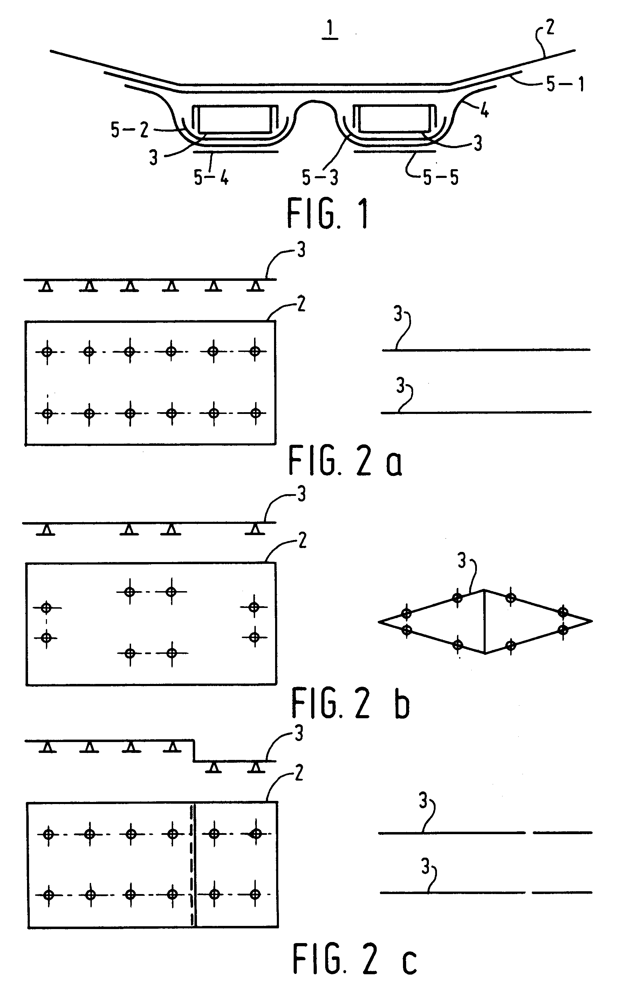

Fig 1 illustrates in section a synthetic body 1 comprising a bottom part 2 and longitudinal girders 3 of synthetic material. The synthetic body 1 will be made of a synthetic material such as e.g. polyester or the like. The synthetic material will generally have a laminate construction whereby the laminate may be reinforced with e.g. a nylon or a different fibre. A laminate construction consisting of reinforced polyester will e.g. be possible.

At the bottom side of the bottom part 2 illlustrated in fig 2 there are provided two longitudinal girders 3. The longitudinal girders 3 will generally have a U-shaped profile, but also a box-shaped profile formed by two U-profiles slid into each other, as illustrated in fig 1, is within the bounds of the possible. By laminating, i.e. by providing at least one layer of laminate material 4 the longitudinal girders 3 are attached to the bottom part 2. Preferably the laminate material is made of the same synthetic material as the body 1 and the longitudinal girders 3. If desired the carriage 1 and the longitudinal girder 3 may be provided with extra layers of laminate material, illustrated by 5-1 - 5-5, in order to increase the bearing power and for reinforcing purposes. In particular it will be possible to provide curved parts of the U-profile or the bearing surface of the longitudinal girders 3 with an extra layer of laminate material.

The figs 2a - 2c diagrammatically illustrate the locations of the supporting points, at the spots indicated by means of balls in this illustration, with which the synthetic longitudinal girder 3 can be attached to the chassis (not shown) of a vehicle. Said figures furthermore illustrate a few possible geometric forms in which the synthetic longitudinal girders 3 may be provided on the surface of the bottom part 2. Fig 2a illustrates two longitudinal girders 3 located parallel to each other, whereby the various supporting points are illustrated at mutually equal distances from one another. Figs 2a - 2c likewise diagrammatically illustrate in section the bottom part 2 and here in particular the location of the supporting points is illustrated by means of the triangular symbols. The location of the supporting points illustrated by triangles corresponds with the location of the supporting points illustrated by means of balls. Fig 2b illustrates a triangular or lozenge-shaped extension of the longitudinal girders 3 over the bottom surface 2, whilst fig 2c illustrates the bottom part 2 with the supporting points, whereby the bottom part 2 and the longitudinal girders 3 have different levels. In principle the method allows a free choice of the extension of the longitudinal girder 3 and the location of the various supporting points.

A free choice of said extension of the longitudinal girders 3 over the bottom part 2 will in particular be possible in dependence on the desired distribution of the mechanical load which the carriage work 1 forms for a type of chassis which is used. By simply adapting said extension the same type of body can be made suitable for use on several types of chassis.

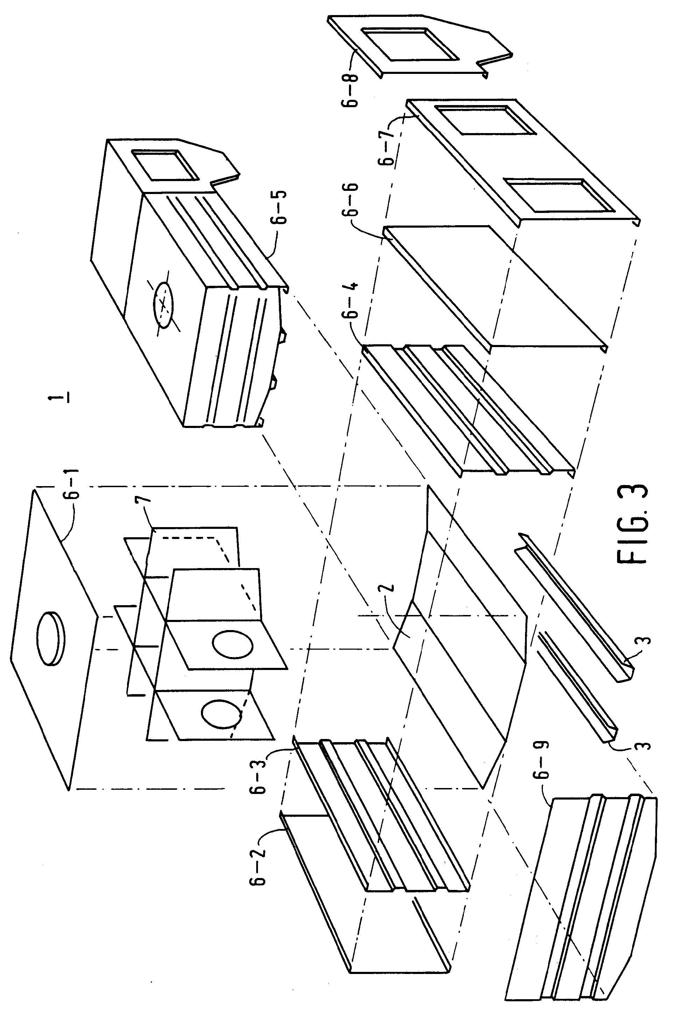

Fig 3 is an exploded view of a preferential embodiment of the body 1. The body 1 is assembled from a number of component parts, which are numbered 6-1 - 6-9. If desired a component part may be reinforced, prior to laminating with an other component part, at the location of the contact surface with the other component part, by providing an extra layer of laminate material (not shown in this figure). The closed structure of the body 1 thus produced may be used, at least partly, for transporting e.g. liquids. For this purpose a partition 7 is laminated in a relevant tank part of the structure, which partition restricts the wave motion and positively influences the sturdiness of the body.

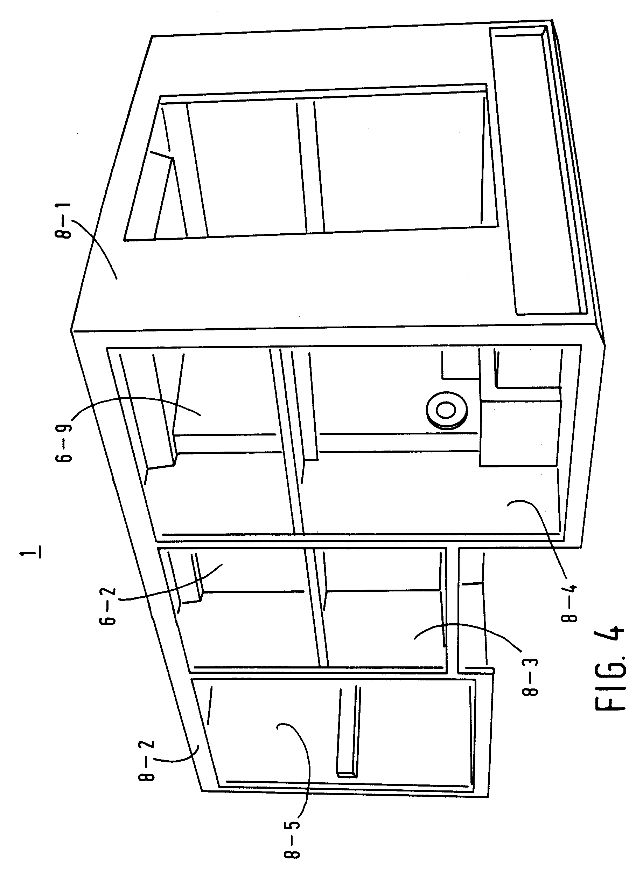

Fig 4 illustrates a possible embodiment of the body 1, which is particularly suitable for use on the chassis of fire engines.

Further component parts, indicated by the reference numbers 8-1 - 8-5 are attached, by means of laminating, to the component parts whose parts 6-2 and 6-9 are illustrated in fig 4. Partitions and cabinets with shelves can be realised herewith, which may e.g. be used for stowing away fire hoses, fire extinguishing equipment and clothes or the like. Such a structure may also be realised for e.g. terrain vehicles, tank lorries or the like.

## Claims

1. Method for manufacturing a body of synthetic material, whereby at least one longitudinal girder (3) of synthetic material is attached to a bottom part (2) of the body characterized in that the method comprises the following steps:

   a: a substantially U-shaped profile of the longitudinal girder (3) is chosen;

   b: at least one extra layer of laminate material is provided on the profile;

   c: at least one extra layer of laminate material (4) is provided on the place where the longitudinal girder is to be laminated on the bottom part (2); and

   d: the extra laminated profile is attached to the extra laminated bottom part by means of laminating, by providing the extra laminated profile, together with the extra laminated bottom part, with at least one layer of laminate material.

2. Method according to claim 1, characterized in that at least one extra layer of laminate material is provided on at least the curved parts of the U-shaped profile of the longitudinal girder.

3. Method according to claims 1 or 2, characterized in that at least one extra layer of laminate material is provided on a bearing surface of the longitudinal girder.

4. Method according to any one of the claims 1 - 3, characterized in that component parts of the synthetic body, which are to be attached together and to the bottom part, are provided with an extra layer of laminate material at the spot of respective contact surfaces prior to being laminated together into one closed structure.

5. Method according to claim 4, characterized in that at least one wall forming a partition is laminated in the structure.

6. Method according to claims 4 or 5, characterized in that additional component parts of the synthetic body, are provided with an extra layer of laminate material at the spot of respective further contact surfaces, prior to being attached to the structure by means of laminating.

7. Synthetic body manufactured according to the method of any one of the preceding claims.

8. Vehicle provided with a synthetic body according to claim 7.

## Patentansprüche

1. Verfahren zur Herstellung eine Karosserie aus Kunststoff, wodurch wenigstens ein in Längsrichtung verlaufender Träger (3) aus Kunststoff an einem Bodenteil (2) der Karosserie befestigt is, dadurch gekennzeichnet, daß das Verfahren aus den nachfolgenden Schritten besteht:

   a: für den in Längsrichtung verlaufenden Träger ist ein im wesentlichen U-förmiges Profil gewählt;

   b: auf dem Profil wird wenigstens eine zusätzliche Schicht Laminatmaterial angebracht;

   c: an der Stelle, an der der in Längsrichtung verlaufende Träger mit dem Bodenteil laminiert wird, wird wenigstens eine zusätzliche Schicht Laminatmaterial angebracht; und

   d: das zusätzlich laminierte Profil wird an dem zusätzlich laminierten Bodenteil mittels Laminieren befestigt, indem das zusätzlich laminierte Profil, zusammen mit dem zusätzlich laminierten Bodenteil mit wenigstens einer zusätzlichen Schicht Laminatmaterial versehen wird.

2. Verfahren nach Anspruch 1, dadurch gekennzeichnet, daß wenigstens eine zusätzliche Schicht Laminatmaterial an wenigstens den gekrümmten Teilen des U-förmigen Profils des in der Längsrichtung verlaufenden Trägers angebracht wird.

3. Verfahren nach Anspruch 1 oder 2, dadurch gekennzeichnet, daß eine Tragefläche des in der Längsrichtung verlaufenden Trägers mit einer zusätzlichen Schicht Laminatmaterial versehen wird.

4. Verfahren nach einem der Ansprüche 1-3, dadurch gekennzeichnet, daß Teile der Kunststoff-Karosserie, die miteinander und mit dem Bodenteil verbunden werden müssen, an der Stelle der jeweiligen Berührungsflächen mit einer zusätzlichen Laminatschicht versehen werden, vor dem Zusammenlaminieren zu einer geschlossenen Konstruktion.

5. Verfahren nach Anspruch 4, dadurch gekennzeichnet, daß wenigstens eine Wand, die eine Trennwand bildet, in der Konstruktion laminiert wird.

6. Verfahren nach Anspruch 4 oder 5, dadurch gekennzeichnet, daß hinzukommenden Teile der Kunststoffkarosserie mit einer zusätzlichen Schicht Laminatmaterial versehen sind, an der Stelle der jeweiligen Berührungsflächen, vor der Befestigung an der Konstruktion mittels Laminierens.

7. Kunststoffkarosserie, hergestellt nach dem Verfahren nach einem der vorigen Ansprüche.

8. Fahrzeug, versehen mit einer Kunststoffkarosserie nach Anspruch 7.

## Revendications

1. Procédé de fabrication d'un corps de matière synthétique dans lequel au moins une poutre longitudinale (3) en matière synthétique est fixée à une partie inférieure (2) du corps, caractérisé en ce qu'il comprend les étapes suivantes:

   a) on choisit pour la poutre longitudinale (3) un profilé sensiblement en forme de U;

   b) on applique sur le profilé au moins une couche supplémentaire de matière stratifiée;

   c) on applique au moins une couche supplémentaire de matière stratifiée (4) à l'endroit où la poutre longitudinale doit être appliquée par stratification sur la partie inférieure (2); et

d) on fixe le profilé stratifié supplémentaire sur la partie inférieure stratifiée supplémantaire par stratification en munissant le profilé stratifié supplémentaire ainsi que la partie inférieure stratifiée supplémentaire d'au moins une couche de matière stratifiée.

2. Procédé selon la revendication 1, caractérisé en ce qu'on applique au moins une couche supplémentaire de matière stratifiée sur au moins les parties incurvées du profilé en forme de U de la poutre longitudinale.

3. Procédé selon les revendications 1 ou 2, caractérisé en ce qu'on applique au moins une couche supplémentaire de matière stratifiée sur une surface portante de la poutre longitudinale.

4. Procédé selon l'une quelconque des revendications 1 à 3, caractérisé en ce que des parties constitutives du corps synthétique, qui doivent être fixées les unes aux autres et à partie inférieure, sont munies d'une couche supplémentaire de matière stratifiée à l'endroit des surfaces de contact respectives avant d'être stratifiées ensemble pour former une structure fermée.

5. Procédé selon la revendication 4, caractérisé en ce qu'au moins une paroi formant une cloison est appliquée par stratification dans la structure.

6. Procédé selon les revendications 4 ou 5, caractérisé en ce que des parties constitutives supplémentaires du corps synthétique sont munies d'une couche supplémentaire de matière stratifiée à l'endroit de surfaces de contact supplémentaires respectives, avant d'être fixées à la structure par stratification.

7. Corps synthétique fabriqué par le procédé selon l'une quelconque des revendications précédentes.

8. Véhicule muni d'un corps synthétique selon la revendication 7.

FIG. 1

FIG. 2 a

FIG. 2 b

FIG. 2 c

FIG. 3

FIG. 4

EP 0 334 450 B1